(19) Europäisches Patentamt
European Patent Office
Office européen des brevets

(11) Publication number: 0 315 025 A1

(12) # EUROPEAN PATENT APPLICATION

(21) Application number: 88117736.4

(51) Int. Cl.4: C08G 73/14

(22) Date of filing: 25.10.88

(30) Priority: 04.11.87 US 117243

(43) Date of publication of application:
10.05.89 Bulletin 89/19

(84) Designated Contracting States:
DE FR GB IT NL

(71) Applicant: GENERAL ELECTRIC COMPANY
1 River Road
Schenectady New York 12305(US)

(72) Inventor: Clagett, Donald Carl
193 Barlett Avenue
Pittsfield Massachusetts 01201(US)
Inventor: Fox, Daniel Wayne
193 Dawes Avenue
Pittsfield Massachusetts 01201(US)
Inventor: Maresca, Louis Michael
100 East Covent Garden
Guilderland New York 12084(US)
Inventor: Shafer, Sheldon Jay
40 Day Street
Pittsfield Massachusetts 01201(US)

(74) Representative: Catherine, Alain
General Electric France Service de Propriété
Industrielle 18 Rue Horace Vernet B.P. 76
F-92134 Issy-les-Moulineaux Cédex(FR)

(54) **Amide-imide copolymers and process for the preparation thereof.**

(57) Copolymers comprising amide units and imide units are prepared by melt phase interchange of diaryl esters of dicarboxylic acids, diamines and dianhydrides of tetracarboxylic acids. The products are tough resins, useful per se as molding compounds, and to compatibilize and toughen other thermoplastic polymers.

EP 0 315 025 A1

Xerox Copy Centre

# AMIDE-IMIDE COPOLYMERS AND PROCESS FOR THE PREPARATION THEREOF

## CROSS REFERENCE TO RELATED APPLICATION

This application is related to earlier filed commonly assigned application

| SERIAL NO. | FILING DATE | TITLE | APPLICANTS | STATUS |
|---|---|---|---|---|
| 909,544 | 9/22/86 | AMORPHOUS POLYAMIDE/POLYETHERIMIDE RESIN BLENDS | D.C. Clagett<br>L.M. Maresca<br>S.J. Shafer | Pending |

## FIELD OF THE INVENTION

The present invention relates to copolymer resins, thermoplastic compositions comprising them, and processes useful in their preparation. More particularly, it is concerned with copolymers, including random copolymers, block copolymers and alternating copolymers, comprising amide units and imide units, molding compositions comprising such copolymers and a melt phase process for their production by interchange of diaryl esters, diamines and tetracarboxylic acid dianhydrides.

## BACKGROUND OF THE INVENTION

Blends of polyamides and polyimides are known to exhibit desirable properties including excellent solvent resistence, ductility and resistance to brittle failure when molded into articles. See, for example, the copending, commonly assigned U.S. patent application of D.C. Clagett, L.M. Maresca, and S.J. Shafer, Serial No. 909,544 filed September 22, 1986, and Andrews, et al, U.S. 4,612,353; Brooks et al, U.S. 4,515,924, as well as PCT Patent Publication, Giles, et al, WO84/03894, October 11, 1984. Novel amide imide copolymers have now been prepared which have excellent and improved physical and mechanical properties, and good chemical resistance and barrier properties. The copolymers are prepared in a melt polymerization process. A wide variety of diamines, diacid esters and tetracarboxylic acid dianhydrides can be used in the process. If, for example, diphenyl iso/terephthalate is reacted with a diamine, such as meta-phenylenediamine and a tetracarboxylic acid dianhydride such as pyromellitic dianhydride in the melt at 120° - 300°C a wide variety of copolymers can be produced. Although Fox and Shafer, U.S. 4,567,249, disclose the melt preparation of polyamides by amine-ester interchange, there is no hint of suggestion in that patent to employ the process employing diester and a diamine on the one hand, and a tetracarboxylic dianhydride on the other.

## SUMMARY OF THE INVENTION

According to the present invention, there are provided copolymers of the general formula

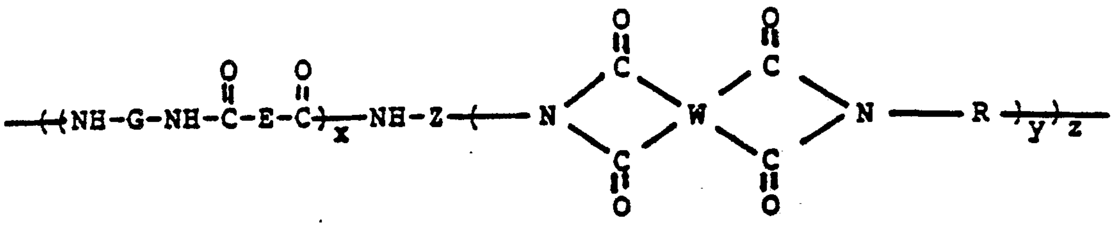

A B

wherein units A comprise from about 1 to about 99 percent by weight of said copolymer and units B comprise from about 99 to about 1 percent by weight of said copolymer, where E is selected from divalent alkyl, aryl, cycloalkyl, arylalkyl or alkylaryl groups of from 1 to 30 carbon atoms or a mixture of any of the foregoing, optionally substituted with at least one chlorine, bromine, fluorine, nitro, nitrile, alkyl of from 1 to 6 carbon atoms, alkoxy of from 1 to 6 carbon atoms or aryl of from 6 to 20 carbon atoms; G is a divalent alkyl, aryl, cycloalkyl, arylalkyl or alkylaryl group of from about 2 to about 30 carbon atoms or a mixture of any of the foregoing, optionally interrupted with alkylene, arylene, carbonyl, ether, amino or sulfur-containing groups, optionally substituted with at least one of chlorine, fluorine, bromine, nitro, nitrile, alkyl of from 1 to 6 carbon atoms, alkoxy of from 1 to 6 carbon atoms or aryl of from 6 to 20 carbon atoms; W is a tetravalent aromatic mono- or polycarbocyclic group, optionally interupted with alkylene, arylene, carbonyl, amino, ether, sulfer or silicon-containing groups or mixtures of any of the foregoing such groups, optionally substituted with at least one of chlorine, bromine, fluorine, nitro, nitrile, alkyl of from 1 to 6 carbon atoms, alkoxy of from 1 to 6 carbon atoms, aryl of from 6 to 20 carbon atoms or a mixture of any of such groups, R is a divalent alkylene or cycloalkylene group of from 2 to 20 carbon atoms, a divalent aromatic mono-or polycarbocyclic group of from 6 to 20 carbon atoms, optionally interrupted with alkylene groups of from 1 to 6 carbon atoms or arylene groups of from 6 to 20 carbon atoms, amino, ether, carbonyl or sulfur-containing groups or a mixture of any of the foregoing such groups; Z is as defined for G or R; and x, y and z are each integers of from 1 to 100,000.

Preferred copolymers are those wherein units of A comprise from about 20 to about 80 percent by weight and units of B comprise from about 80 to about 20 percent by weight of A and B combined, and especially preferred are copolymers wherein units of A comprise from about 40 to about 60 percent by weight and units of B comprise from about 60 to about 40 percent by weight of A and B combined.

The copolymers can comprise random copolymers, e.g., x, y and z no repeating pattern, block copolymers, e.g., x and y are greater than about 15 and z is small; and alternating copolymers, e.g., x and y are less than 5 and z is a relatively high number.

Special mention is made of block copolymers as above defined wherein E is a residuum of adipic acid or

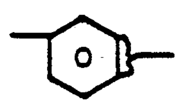

Especially preferred are block copolymers wherein G is selected from a residuum of ethylenediamine, trimethylenediamine, tetramethylenediamine, pentamethylenediamine, 2-methylpentamethylenediamine, hexamethylenediamine, isomeric trimethylhexamethylenediamine, meta-xylylenediamine, para-xylylenediamine, 1,3-bis(aminomethyl) cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)-propane, 1,4-piperazine, meta-phenylenediamine, para-phenylenediamine, bis(4-aminophenyl)methane and the like or mixtures thereof.

Also provided by the present invention is a process to make the block copolymer above defined, said process comprising heating a mixture of at least one diaryl ester of a dicarboxylic acid of the formula

$$Ar^3\text{-O-}\overset{O}{\overset{\|}{C}}\text{-E-}\overset{O}{\overset{\|}{C}}\text{-O-}Ar^3$$

wherein $Ar^3$ represent the same or different mono or dicarbocyclic aryl groups, optionally substituted with at

least one of chlorine, bromine, fluorine or alkyl of from 1 to 3 carbon atoms and E is as above defined with a diprimary or disecondary amine of the formula

R-HN-G-NH-R

or a mixture thereof wherein G is as above defined and R is hydrogen or alkyl of from 1 to 10 carbon atoms, a diamine of the formula

$N_2N\text{-}R\text{-}NH_2$

wherein R is as defined above and at least one tetracarboxylic acid dianhydride of the formula

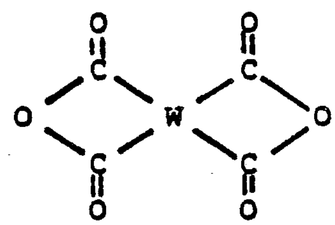

wherein W is as above defined until formation of said amide-imide copolymer is substantially complete.

Preferably, the diaryl ester comprises a diaryl terephthalate, a diaryl isophthalate a diaryl adipate or a mixture thereof. Especially preferably, the diaryl ester will comprise diphenyl isophthalate, diphenyl terephthalate or diphenyl adipate. Preferably also, the diamine in the amide unit comprises ethylenediamine, trimethylenediamine, tetramethylenediamine, pentamethylenediamine, 2-methylpentamethylenediamine, hexamethylenediamine, isomeric trimethylhexamethylenediamine, meta-xylylenediamine, para-xylylenediamine, 1,3-bis(aminomethyl) cyclohexane, 1,4-bis(aminomethyl) cyclohexane, 1,3-diaminocyclohexane, 1,4-diaminocyclohexane, bis(4-aminocyclohexyl)methane, 2,2-bis(4-aminocyclohexyl)-propane, 1,4-piperazine, meta-phenylenediamine, para-phenylenediamine, bis(4-aminophenyl)methane and the like or mixtures thereof. Preferably also, the dianhydride comprises pyromellitic acid dianhydride, benzophenone tetracarboxylic acid dianhydride, 4,4′-isopropylidene-bis(4-phenyleneoxyphthalic anhydride), or a mixture thereof. The diamine in the imide unit preferably comprises meta-phenylenediamine para-phenylenediamine, 4,4′-diaminodiphenylether, 4,4′-diamino diphenyl sulfone or a mixture of any of the foregoing. Preferably the diamine in the imide units comprises meta-phenylenediamine.

Among the preferred features of the invention are block copolymers prepared in a melt phase process by the interchange of an excess of a diamine with a diaryl ester to produce a polyamide having amine terminal groups and further interchanging the polyamide with a diamine and a dianhydride of a tetracarboxylic acid to form a polyamide-polyimide block copolymer containing from about 1 to about 99 percent by weight of polyamide segments and from about 99 to about 1 percent by weight of polyimide segments.

The block copolymers are thermoformable into shaped articles which are tough, thermally stable, often transparent and resistant to hydrolysis. They are also useful as blending resins with, for example, nylons, polyimides poly(amide imides), poly(etherimides) and polyarylates.

## DETAILS DESCRIPTION OF THE INVENTION

As examples of diamines particularly suitable for use in preparing the A units can be mentioned diprimary diamines of the general formula above. Illustrative examples are ethylenediamine, trimethylenediamine, tetramethylenediamine, pentamethylenediamine, 2-methylpentamethylenediamine, hexamethylenediamine, isomeric trimethylhexamethylenediamine, meta-xylylenediamine, para-xylylenediamine, 1,3-bis(aminomethyl) cyclohexane, 1,4-bis(aminomethyl) cyclohexane, 1,3-diaminocyclohexane, 1,4-diaminocyclohexane, bis(4-aminocyclohexyl)methane, 2,2-bis(4-aminocyclohexyl) propane, 1,4-piperazine, metal-phenylenediamine, para phenylenediamine, bis(4-aminophenyl)methane and the like or mixtures thereof.

Illustratively useful diesters suitable as sources for structural units E are esters of dicarboxylic acids such as diphenylic esters derived from phenol itself, and alkylor halo-substituted phenols, such as o-, mand

p-cresols, and o-, mand p-chlorophenol and the like, and a dicarboxylic acid, such as adipic, azelaic sebacic, glutaric, phthalic, terephthalic, isophthalic, naphthalene dicarboxylic acid biphenyl dicarboxylic acid, and the like, and mixtures of any of them. A preferred family of diesters comprise the diphenyl esters of terephthalic acid, iosphthalic acid, adipic acid and mixtures of any of them.

The polyimide units comprising the block copolymers of this invention have of the formula

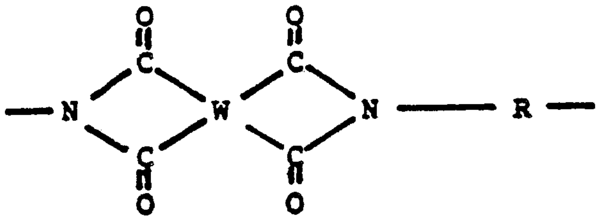

wherein R and W are as above defined. W typically will be an aromatic moiety containing 1 to 4 benzene rings including fused benzene rings. The rings may be substituted with known groups such as chlorine, bromine, fluorine, nitro, cyano, alkyl of from 1 to 6 carbon atoms alkoxyl of from 1 to 6 carbon atoms and the like. The rings amy be interrupted with alkylene and alkenylene chains, arylene groups, oxygen and oxygen containing groups, such as carbonyl, sulfur-containing, nitrogen containing, phosphorus-containing and silicon containing groups. Mention is made, for example, of pyromellitic acid dianhydride and benzophenone tetracarboxylic acid dianhydride. These are known in the art to produce polyimides by reaction with diprimaryamines. Preferably, however, the segments B will comprise polyetherimide segments, preferably comprising units in which W is of the formula

> D - O - Z - O - D <

the > D-O group being selected from the following formulas

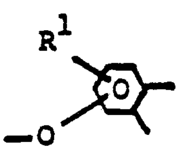 , 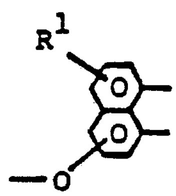 and 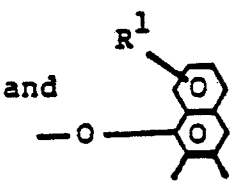

R¹ being hydrogen, halogen, alkyl or alkoxy of from 1 to 6 carbon atoms. Z will be selected from

(i) divalent radicals of the formulae:

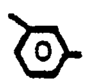 , 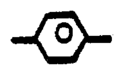 , and 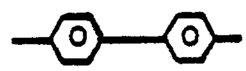

including the corresponding halo and alkyl and alkoxy of from 1 to 6 carbon atoms substituted species for these formulas,

(ii) divalent radicals of the general formula:

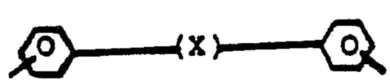

wherein X is selected from

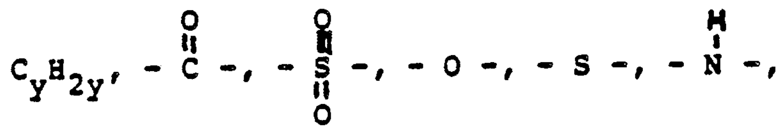

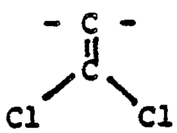 and 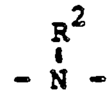

wherein y is an integer of from 1 to 10 and $R^2$ is alkyl of 1 to 6 carbon atoms.

In preferred polyimides (and polyetherimides) R will be organic and selected from (i) $C_6$-$C_{20}$ aromatic hydrocarbon radicals, $C_2$-$C_{20}$ alkylene radicals and cycloalkylene radicals and (ii) divalent radicals of the formula

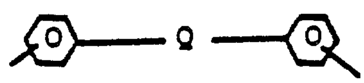

wherein Q is selected from

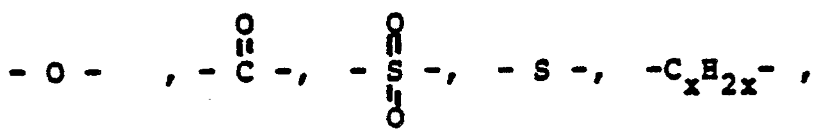

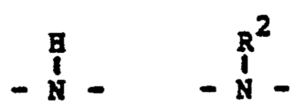 and 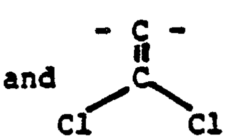

$R^2$ being alkyl of from 1 to 6 carbon atoms and x an integer of from 1 to 10.

The preferred poly(etherimide) resins comprise units of the above formula wherein the divalent radical - O - Z - O - is either in the 3,3′, 3,4′, 4,3′ or 4,4′ position. The divalent radical Z is most preferably of the formula

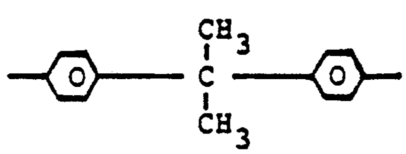

and R is most preferably of the following formulae respectively:

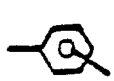, 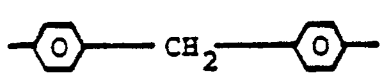 and 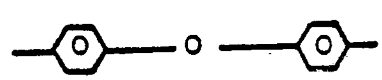

The dianhydrides to be employed in the process of the reaction will be those of the general formula

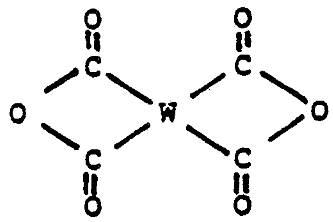

Preferably they will be aromatic bis(ether anhydrides) of the formula,

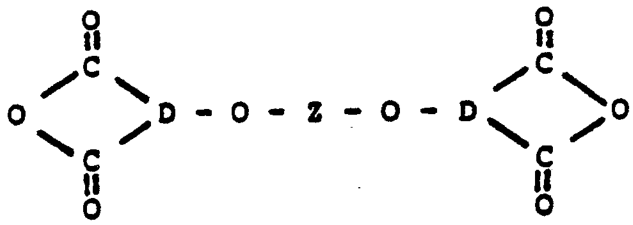 IV

wherein Z and D are as defined above. Because bisphenylene anhydride is the most readily available dianhydride of this type, i.e. wherein the group > D - O - is one of the formulas below,

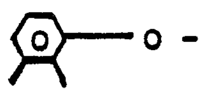 and 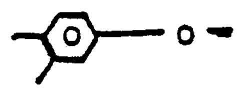

reference will be made hereinafter to it and the poly(etherimides) derived from it. However, it should be understood that either of its two carboxy group position isomers or the other species within the scope the group > D - O - may be substituted therefor when appropriate.

Particular examples of the aromatic bis anhydrides include
pyromellitic dianhydride;
benzophenone tetracarboxylic acid dianhydride,
2,2-bis(4-(2,3-dicarboxyphenoxy)phenyl)propane dianhydride;
4,4'-bis(2,3-dicarboxyphenyoxy)diphenyl ether dianhydride;
1,3-bis(2,3-dicarboxyphenoxy)benzene dianhydride;
4,4'-bis(2,3-dicarboxyphenoxy)benzophenone dianhydride;
1,4-bis(2,3-dicarboxyphenoxy)diphenyl sulfone dianhydride;
2,2'bis(4-(3,4-dicarboxyphenoxy) phenyl)propane dianhydride;
4,4'-bis(3,4-dicarboxyphenoxy)diphenyl ether dianhydride;
4,4'-bis(3,4-dicarboxyphenoxy)diphenyl sulfide dianhydride;
1,3-bis(3,4-dicarboxyphenoxy)benzene dianhydride;
1,4-bis(3,4-dicarboxyphenoxy)benzene dianhydride;
4,4'-bis(3,4-dicarboxyphenoxy)benzophenone dianhydride;
4-(2,3-gncarboxyphenoxy)-4'(3,4-dicarboxyphenoxy)diphenyl-2,2-propane dianhydride;
etc., and mixtures of such dianhydrides.

Particular examples of the organic diamines suitable for making the polyimide units for this invention include, for example,
m-phenylenediamine,
p-phenylenediamine,
4,4'-diaminodiphenylmethane,
benzidine,
4,4'-diaminodiphenyl sulfide,
4,4'-diaminodiphenyl sulfone,
4,4'-diaminodiphenyl ether,
1,5-diaminonaphthalene,
3,3'-dimethylbenzidine,

3,3′-dimethoxybenzidine,
2,4-bis(beta-amino-t-butyl)toluene,
bis(p-beta-amino-t-butyl)toluene,
bis(p-beta-methyl-o-aminopentyl)benzene,
1,3-diamino-4-isopropylbenzene,
1,2-bis(3-aminopropoxy)ethane,
m-xylylenediamine,
p-xylylenediamine,
2,4-diaminotoluene,
2,6-diaminotoluene,
bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine,
3-methylheptamethylenediamine,
2,5-dimethylhexamethylenediamine,
2,5-dimethylheptamethylenediamine,
3-methylheptamethylenediamine,
5-methylnonamethylenediamine,
1,4-cyclohexanediamine,
1,12-octadecanediamine,
bis(3-aminopropyl)sulfide,
N-methyl-bis(3-aminopropyl)amine,
hexamethylenediamine,
nonamethylenediamine,
decamethylenediamine,
bis(3-aminopropyl)tetramethyldisiloxane,
bis(4-aminobutyl)tetramethyldisiloxane, etc.,
and mixtures of such diamines.

This process can be carried out in one or two stages depending on the structure of the final copolymer desired. For example, carrying out the process in one stage with all components mixed produces a random copolymer in which x, y and z have no consistently recurring values. If, however, essentially stoichiometric amounts of the diaryl ester of a dicarboxylic acid and a diamine are reacted in the first stage followed by further polymerization in a second stage with essentially stoichiometric amounts of a diamine and a tetracarboxylic acid dianhydride then a block copolymer is formed where in x and y are consistently greater than 15. In a third variation if, 2 equivalents of a diamine is reacted with a diaryl ester of a dicarboxylic acid in step one very small nylon oligomers are formed. Addition of a tetracarboxylic acid dianhydride in a second step results in the formation of essentially alternating amide-imide copolymers. Values of x and y are essentially less than about 5. In all cases the combined concentrations of diaryl esters of dicarboxylic acids and tetracarboxylic and dianhydrides must be ėssentially equal to the combined concentrations of diamines used.

The products of the process may be molded in any desired shape and are useful as structural and engineering materials to replace traditional materials in applications, as stand alone resins, in blends with other resins, such as nylons, polyimides, polyesterimides etc., and as tie resins to bond two difference resin layers.

## DESCRIPTION OF THE PREFERRED EMBODIMENTS

The following examples illustrate the invention. They are not to be construed to limit the claims in any manner whatsoever.

## EXAMPLE 1

A 4CV Helicone reactor was charged with 477.5 g (1.50 moles) of diphenyl isophthalate, and 177.8 g (1.53 moles) of hexamethylenediamine and blanketed with nitrogen. Agitation was initiated and the reaction temperature raised to 180 °C - 185 °C. After 45 minutes at 180 °C - 185 °C, the reaction temperature was lowered to 160 °C and 324.3 g (0.625 moles) of 4,4′-isopropylidene-bis(4-phenyleneoxyphthalic anhydride) and 67.6 g (0.625 moles) of m-phenylenediamine were added to the reactor. Upon completion of this addition the temperature was immediately increased to 250 °C - 255 °C and held there for 45 minutes. The reaction temperature was again raised to 285 °C - 290 °C and an initial partial vacuum of 125mm of Hg was pulled. Over a 45 minutes period the pressure was decreased from 125mm of Hg to a full vacuum, less than 2mm of Hg. After 1 hour the vacuum was broken, the reactor discharged and the polymer extrudate allowed to cool to room temperature. The final block copolymer was tough and had an intrinsic viscosity in phenol/tetrachloroethane (60/40) of 0.88 dl/g. Glass transition temperatures for both blocks at 125 °C and 202 °C were identified by differential scanning calorimetry.

## EXAMPLE 2

Example 1 was repeated to produoe a tough block copolymer with an intrinsic viscosity of 0.75 dl/g and glass transition temperatures of 123 °C and 202 °C.

## EXAMPLES 3 AND 4

If the procedure of Example 1 is repeated except that the dianhydride used is replaced, respectively, by pyromellitic dianhydride and benzophenone-2,2′,3,3′ tetracarboxylic acid dianhydride, block copolymers in accordance with this invention will be produced.

## EXAMPLES 5 AND 6

If the procedure of Example 1 is repeated, substituting for the hexamethylenediamine, 1,3-bis (aminomethyl)cyclohexane and 1,4-bis(aminomethyl) cyclohexane, block copolymers according to this invention will be obtained.

## EXAMPLE 7

If the procedure of Example 1 is repeated, substituting trimethylhexamethylenediamine for hexamethylenediamine, a copolymer product according to this invention will be obtained.

## EXAMPLE 8

If the procedure of Example 1 is repeated, substituting for the diphenyl isophthalate a 50-50 weight/weight mixture of diphenyl isophthalate and diphenyl terephthalate a block copolymer according to this invention will be obtained.

## EXAMPLE 9

If the procedure of Example 1 is repeated, substituting for the diphenyl isophthalate, diphenyl adipate, a block copolymer in accordance with this invention will be obtained.

## EXAMPLE 10

If the procedure of Example 1 is repeated, substituting 4,4′-diaminodiphenylmethane for the metaphenylenediamine employed in the second stage, a block copolymer in accordance with this invention will be obtained.

## EXAMPLE 11

If the procedure of Example 1 is repeated, except that the reactor is charged initially with all of the components, a random copolymer in accordance with this invention will be obtained.

## EXAMPLE 12

If the procedure of Example 1 is repeated, except that 2 equivalents of the diamine is reacted with the aryl ester followed by the addition of the tetracarboxylic dianhydride, a substantially alternating amide imide copolymer in accordance with this invention will be obtained.

The above-mentioned patents and publications, are incorporated herein by reference.

Many variations of this invention will suggest themselves to those skilled in this art in light of the above, detailed description. For example, instead of diphenyl isophthalate and diphenyl terephthalate, the following diaryl esters can be used, diphenyl adipate, diphenyl azelate, diphenyl sebacate, diphenyl glutarate, diphenyl naphthalene dicarboxylate, diphenyl biphenyl dicarboxylate, mixtures of any of the foregoing, and the like. Instead of hexamethylenediamine and the other diamines used, the following may be substituted: ethylenediamine, tremetylenediamine, tetramethylenediamine, pentamethylenediamine, 2-methylpentamethylenediamine, isomeric trimethylhexamethylenediamine, meta-xylylenediamine, para-xylylene diamine, 1,3-bis(aminomethyl)cyclohexane, 1,4-bis(aminomthyl) cyclohexane, 1,3-diaminocyclohexane, 1,4-diaminocyclohexane, bis(4-aminocyclohexyl)methane, 2,2-bis(4-aminocyclohexyl)propane, 1,4-piperazine, meta-phenylenediamine, para-phenylenediamine, bis(4-aminophenyl)methane and the like or mixtures thereof. All such obvious variations are within the full intended scope of the appended claims.

## Claims

1. An amide-imide copolymer of the general formula

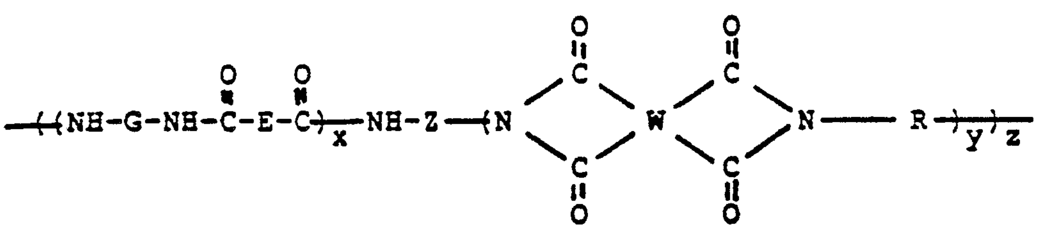

A B

wherein units A comprise from about 1 to about 99 percent by weight of said block copolymer and units B comprise from about 99 to about 1 percent by weight of said copolymer, where E is selected from divalent alkyl, aryl, cycloalkyl, arylalkyl or alkylaryl groups of from 2 to 30 carbon atoms or a mixture of any of the foregoing, optionally substituted with at least one chlorine, bromine, fluorine, nitro, nitrile, alkyl of from 1 to 6 carbon atoms, alkoxy of from 1 to 6 carbon atoms or aryl of from 6 to 20 carbon atoms; G is a divalent alkyl, aryl, cycloalkyl, arylalkyl or alkylaryl group of from about 2 to about 30 carbon atoms or a mixture of any of the foregoing, optionally interrupted with alkylene, arylene, carbonyl, ether, amino or sulfur-containing groups, optionally substituted with at least one of chlorine, fluorine bromine, nitro, nitrile, alkyl of from 1 to 6 carbon atoms, alkoxy of from 1 to 6 carbon atoms or aryl of from 6 to 20 carbon atoms; W is a tetravalent

aromatic mono-or polycarbocyclic group, optionally interrupted with alkylene, arylene, carbonyl, amino, ether, sulfur or silicon-containing groups or mixtures of any of the foregoing such groups, optionally substituted with at least one of chlorine, bromine, fluorine, nitro, nitrile, alkyl of from 1 to 6 carbon atoms, alkoxy of from 1 to 6 carbon atoms, aryl of from 6 to 20 carbon atoms or a mixture of any of such groups, R is a divalent alkylene or cycloalkylene group of from 2 to 20 carbon atoms, a divalent aromatic mono or polycarbocyclic group, optionally interrupted with alkylene groups of from 1 to 6 carbon atoms or arylene groups of from 6 to 20 carbon atoms, amino, ether, carbonyl or sulfur-containing groups or a mixture of any of the foregoing such groups; Z is as defined for G or R; and x, y and z are each integers of from 1 to 100,000.

2. A copolymer as defined in Claim 1 which is a block copolymer.

3. A copolymer as defined in Claim 2 which is an alternating copolymer.

4. A copolymer as defined in Claim 1 which is a random copolymer.

5. A copolymer as defined in Claim1 wherein units of A comprise from about 20 to about 80 percent by weight and units of B comprise from about 80 to about 20 percent by weight of A and B combined.

6. A copolymer as defined in Claim 5 wherein units of A comprise from about 40 to about 60 percent by weight and units of B comprise from about 60 to about 40 percent by weight of A and B combined.

7. A copolymer as defined in Claim 1 wherein E is

$-(CH_2)_6-$ or 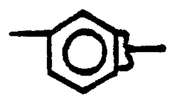 , and

G is divalent alkyl or cycloalkyl of from about 2 to about 30 carbon atoms.

8. A copolymer as defined in Claim 1 wherein G is selected from the residuum of ethylenediamine, trimethylenediamine, tetramethylenediamine, pentamethylenediamine, 2-methylpentamethylenediamine, hexamethylenediamine, isomeric trimethylehexamethylenediamine, metaxylylenediamine, para-xylylenediamine, 1,3-bis(amino methyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, 1,4-piperazine, meta-phenylenediamine, para phenylenediamine, bis(4-aminophenyl)methane and the like or mixtures thereof.

9. A copolymer as defined in Claim 1 wherein W is of the formula:

$>D-O-Z-O-D<$

wherein the $>D-O-$ group is selected from

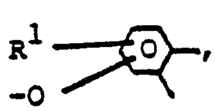, 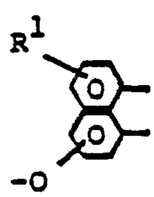 and 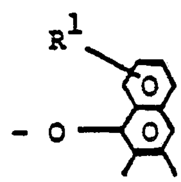

$R^1$ being hydrogen, alkyl or alkoxy of from 1 to 6 carbon atoms, Z is selected from
(1) divalent aromatic radicals of the formulae

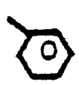 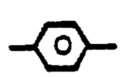 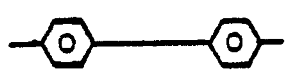

or a halo, alkyl or alkoxyl of from 1 to 6 carbon atoms derivative thereof, and (2) divalent organic radicals of the general formula

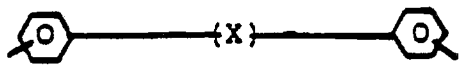

wherein X is selected from

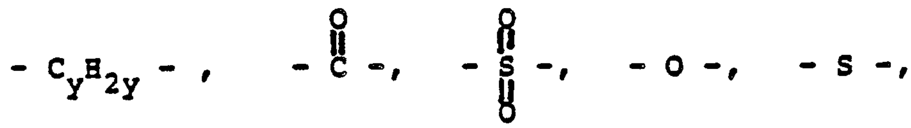

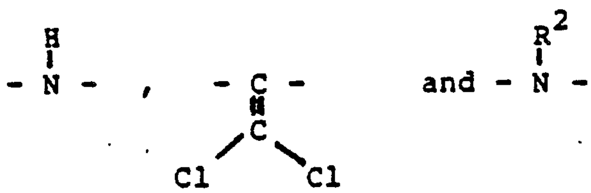

and

wherein y is an integer of from 1 to 5 and $R^2$ is alkyl of from 1 to 6 carbon atoms and R is a divalent organic radical selected from (i) aromatic hydrocarbon radicals of 6 to 20 carbon atoms, alkylene and cycloalkylene radicals of from 2 to 20 carbon atoms, or (ii) divalent radicals of the formula

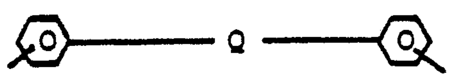

wherein Q comprises

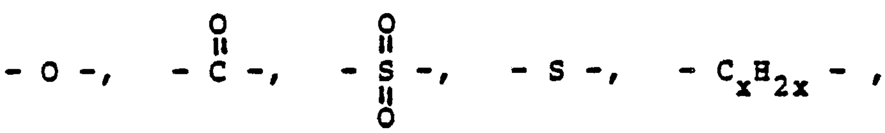

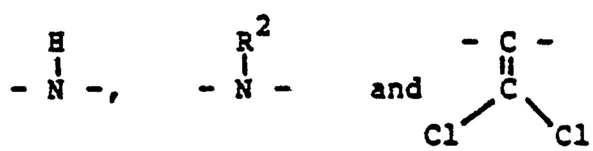

and

$R^2$ being as above defined and x being an integer of from 1 to 10.

10. A copolymer as defined in Claim 9 where W comprises units of the formula

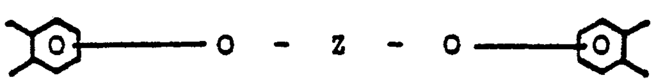

wherein the - O - Z - O - radical is in the 3,3 , 3,4 , 4,3 or 4,4 position.

11. A copolymer as defined in Claim 10 wherein Z is

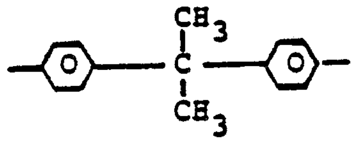

and R is selected from

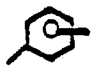 , 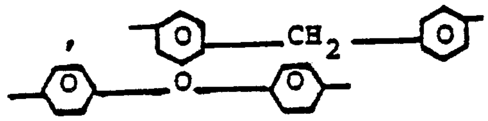

12. A copolymer as defined in Claim 1 wherein W comprises units of the formula

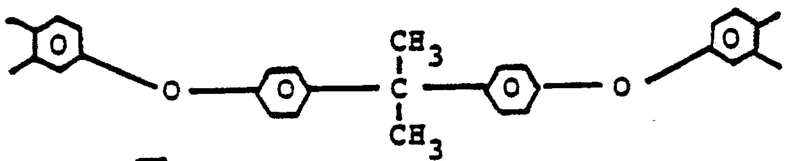

**and R is** 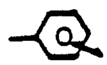

13. A process for the preparation of an amide-imide copolymer as defined in Claim 1, said process comprising heating a mixture of at least one diaryl ester of a dicarboxylic acid of the formula

$$Ar^3\text{-}O\text{-}\overset{O}{\overset{\|}{C}}\text{-}E\text{-}\overset{O}{\overset{\|}{C}}\text{-}O\text{-}Ar^3$$

wherein $Ar^3$ represents the same or different mono or dicarbocyclic aryl groups, optionally substituted with at least one of chlorine, bromine, fluorino or alkyl of from 1 to 3 carbon atoms and E is as defined in Claim 1 with a diprimary or disecondary amine of the formula

R-HN-G-NH-R

or a mixture thereof wherein G is as defined in Claim 1 and R is hydrogen or alkyl of from 1 to 10 carbon atoms a diamine of the formula

$H_2N\text{-}R\text{-}NH_2$

wherein R is as defined in Claim 1 and at least one tetracarboxylic acid dianhydride of the formula

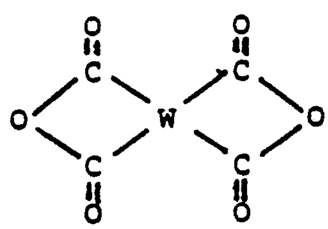

wherein W is as defined in Claim 1 until formation of said amide-imide copolymer is substantially complete.

14. A process as defined in Claim 13 wherein all ingredients are heated together whereby a random copolymer is produced.

15. A process as defined in Claim 16 wherein the diaryl ester and the diamine are heated in one stage and the diamine and tetracarboxylic acid dianhydride are heated in another stage whereby a block copolymer is produced.

16. A process as defined in Claim 15 wherein the diaryl ester and diamine are heated in one stage and the tetracarboxylic acid dianhydride is added and reacted in the second stage whereby in alternating copolymer is produced.

17. A process as defined in Claim 13 wherein the diaryl ester comprises a diaryl terephthalate, a diaryl isophthalate, a diaryl adipate or a mixture thereof.

18. A process as defined in Claim 17 wherein said diaryl ester comprises diphenyl isophthalate or diphenyl terephthalate.

19. A process as defined in 17 wherein said diaryl ester comprises diphenyl adipate.

20. A process as defined in Claim 13 wherein the diamine $H_2N$-G-$NH_2$ comprises ethylenediamine, trimethylenediamine, tetramethylenediamine, pentamethylenediamine, 2-methylpentamethylenediamine, hexamethylenediamine, isomeric trimethylehexamethylenediamine, metaxylylenediamine, para-xylylenediamine, 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, 1,4-piperazine, meta-phenylenediamine, para phenylenediamine, bis(4-aminophenyl)methane or mixtures thereof.

21. A process as defined in Claim 13 wherein the tetracarboxylic acid dianhydride comprises pyromellitic acid dianhydride, benzophenone tetracarboxylic acid dianhydride, 4,4′-isopropylidene-bis (4-phenyleneoxyphthalic anhydride), or a mixture thereof.

22. A process as defined in Claim 21 wherein said dianhydride comprises 4,4′-isopropylidene-bis(4-phenyleneoxyphthalic anhydride).

23. A process as defined in Claim 15 wherein the diamine $H_2N$-R-$NH_2$ comprises meta-phenylenediamine, para-phenylenediamine, methylenedianiline, 4,4′-diaminodiphenylether, 4,4′-diaminodiphenyl sulfone or a mixture of any of the foregoing.

24. A process as defined in Claim 23 wherein the diamine comprises meta-phenylenediamine.

25. A process as defined in Claim 13 comprising heating a mixture of diphenyl isophthalate and hexamethylenediamine and thereafter adding to the mixture meta phenylenediamine and 4,4′-isopropylidene-bis(4-phenyleneoxyphthalic anhydride) and heating under the conditions described.

26. A block copolymer prepared in a melt phase process by the interchange of an excess of a diamine with a diaryl ester to produce a polyamide having amine terminal groups and further interchanging the polyamide with a diamine and a tetracarboxylic acid dianhydride to form a polyamide-polyimide block copolymer containing from about 1 to about 99 percents by weight of polyamide segments and from about 99 to about 1 percent by weight of polyimide segments.

27. A block copolymer as defined in Claim 26 wherein the diamine in the second stage comprises meta-phenylenediamine or para-phenylene diamine.

28. A block copolymer as defined in Claim 26 wherein the diaryl ester comprises diphenyl isophthalate, dipehnyl terephthalate or diphenyl adipate.

29. A block copolymer as defined in Claim 26 wherein the diamine in the first stage comprises ethylenediamine, trimethylenediamine, tetramethylenediamine, pentamethylenediamine, 2-methylpentamethylenediamine, hexamethylenediamine, isomeric trimethylehexamethylenediamine, metaxylylenediamine, para-xylylenediamine, 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, 1,4-piperazine, meta-phenylenediamine, para phenylenediamine, bis(4-aminophenyl)methane and the like or mixtures thereof.

30. A block copolymer as defined in Claim 26 wherein the tetracarboxylic acid dianhydride comprises pyromellitic acid dianhydride, benzophenone tetracarboxylic acid dianhydride, 4,4′-isopropylidene-bis (4-phenyleneoxyphthalic anhydride), or a mixture thereof.

European Patent Office

# EUROPEAN SEARCH REPORT

Application Number

EP 88 11 7736

| DOCUMENTS CONSIDERED TO BE RELEVANT | | | |
|---|---|---|---|
| **Category** | **Citation of document with indication, where appropriate, of relevant passages** | **Relevant to claim** | **CLASSIFICATION OF THE APPLICATION (Int. Cl.4)** |
| A | EP-A-0 156 029 (GENERAL ELECTRIC CORP.)<br>--- | | C 08 G 73/14 |
| A | US-A-4 332 929 (F.F. HOLUB)<br>--- | | |
| A | CHEMICAL ABSTRACTS, vol. 104, no. 16, 21st April 1986, page 35, abstract no. 130783j, Columbus, Ohio, US; & JP-A-60 177 023 (IDEMITSU KOSAN CO., LTD) 11-09-1985<br>--- | | |
| A | CHEMICAL ABSTRACTS, vol. 100, no. 22, 28th Mai 1984, page 17, abstract no. 175555v, Columbus, Ohio, US; & JP-A-58 222 112 (MITSUI TOATSU CHEMICALS, INC.) 23-12-1983<br>--- | | |
| A | CHEMICAL ABSTRACTS, vol. 100, no. 1, 2nd July 1984, page 34, abstract no. 69238j, Columbus, Ohio, US; & JP-A-58 154 729 (MITSUI TOATSU CHEMICALS, INC.) 14-09-1983<br>--- | | **TECHNICAL FIELDS SEARCHED (Int. Cl.4)** |
| A | CHEMICAL ABSTRACTS, vol. 98, no. 4, 24rd January 1983, page 12, abstract no. 17225y, Columbus, Ohio, US; & 57 94 016 (MITSUI TOATSU CHEMICALS, INC.) 11-06-1982<br>----- | | C 08 G |

The present search report has been drawn up for all claims

| Place of search | Date of completion of the search | Examiner |
|---|---|---|
| THE HAGUE | 02-02-1989 | LEROY ALAIN |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document